# EUROPEAN PATENT APPLICATION

(11) **EP 2 640 136 A2**
(43) Date of publication of application: **18.09.2013**
(21) Application number: 12006752.5
(22) Date of filing: 27.09.2012
(51) Int. Cl.: H04W 52/02

(54) **Application processor wake-up suppression**

(30) Priority: 12.03.2012 US 201213417914
(71) Applicant: Broadcom Corporation, Irvine, CA 92617 (US)
(72) Inventor: Kashikar, Anand, 560103 Bangalore (IN)
(74) Representative: Jehle, Volker Armin

(57) **Abstract**

A method and device that intelligently suppresses reporting of an "in-service" condition to the application processor in a mobile station when the mobile station experiences low received signal strength. When the mobile station's application processor is in a power-saving mode, an in-service condition is not reported to the application processor until certain conditions are met. Delayed reporting of the in-service condition will help prevent a toggling effect (or "ping-pong") of reporting an in-service condition immediately followed by a not-in-service condition. Because the application processor can remain asleep until a sufficiently reliable received signal is available, suppressing reporting of the in-service condition helps prevent unnecessarily waking-up the application processor, and thereby reduces battery consumption.

## Description

### INVENTOR: ANAND DEVIDAS KASHIKAR

### 1. Technical Field.

This disclosure relates to wireless communication systems. In particular, this disclosure relates to determining when to wake up a processor in a mobile station.

### 2. Background.

Continual development and rapid improvement in wireless communications systems have placed increased demands on manufactures of mobile stations (e.g. pagers, cell phones, smartphones, and other wireless devices) to operate with improved performance, in part to reduce power consumption and extend battery life. One way to save power is to place the mobile station's application processor into a "sleep mode" (i.e., power-saving mode), which reduces battery consumption while the processor is in sleep mode. For example, when a user stops interacting with a mobile station, the mobile station can take advantage of the inactivity by placing the processors that ordinarily handle the user interactions into a power-saving sleep mode.

Wireless devices depend on wireless signals for communication, and the mobile station monitors the status of these wireless signals, for example by determining a Received Signal Strength Indicator (RSSI). When the mobile station is on the threshold of coverage (e.g., when a low signal level is received at the mobile station), the processors may be kept "awake" as the mobile station toggles between an "in-service" condition and a "not-in-service" condition. Toggling between conditions may occur because each time the mobile station detects signal coverage, it reports an in-service condition to a processor.

Reporting an in-service condition to the processor may wake-up the processor so that it may perform tasks such as background data transmission. However, because the mobile station is on the threshold of coverage, the mobile station may not be able to reliably transmit background data over the wireless link. Even though the mobile station cannot reliably perform background data transmission, the processor is nonetheless kept awake while the mobile station toggles between an in-service condition and a not-in-service condition. Thus, while the mobile station toggles between the in-service condition and the not-in-service condition, the mobile station is not able to take advantage of the processor's power-saving sleep mode.

### BRIEF SUMMARY OF THE INVENTION

According to an aspect, a method is provided for suppressing wake-up of an application processor of a mobile station until an in-service condition is met, the method comprising:
monitoring a received signal strength at the mobile station;
when the received signal strength is less than a timer-starting threshold, starting a reporting timer;
when the reporting timer lapses, determining that an in-service condition is met;
when the in-service condition is met, reporting the in-service condition to the application processor.

Advantageously, the method further comprises:
determining when the received signal strength exceeds a delayed-reporting threshold, and in response, determining that the in-service condition is also met.

Advantageously, the method further comprises:
determining when the received signal strength exceeds a delayed-reporting threshold for a predetermined number of consecutive values of the received signal strength, and in response, determining that the in-service condition is also met.

Advantageously, the method further comprises:
when the received signal strength is less than a timer-reset threshold, restarting the reporting timer.

Advantageously:
the timer-reset threshold is less than the timer-starting threshold.

Advantageously:
the timer-reset threshold is less than the timer-starting threshold; and
the delayed-reporting threshold is less than the timer-starting threshold.

Advantageously, the method further comprises:
when the mobile station receives an out-of-service indication, restarting the reporting timer.

Advantageously, the method further comprises:
determining when the received signal strength is less than a timer-reset threshold for a predetermined number of consecutive values of the received signal strength series of values, and in response, restarting the reporting timer.

Advantageously, the method further comprises:
determining when the mobile station receives a paging indication, and in response, determining that the in-service condition is met.

According to an aspect, a system comprises:
a receiver;
a modem processor in communication with the receiver;
an application processor; and
a memory comprising:
   multiple thresholds; and
   wake-suppression logic, that when executed by the modem processor, causes the modem processor to:
monitor a reported received signal strength at the mobile station;
determine, with respect to at least one of the thresholds, when to start a reporting timer;
determine, with respect to at least one of the thresholds, when to restart the reporting timer;
when the reporting timer lapses, determine that an in-service condition is met;
when the in-service condition is met, report the in-service condition to the application processor.

Advantageously, the system/method further comprises:
determining when the received signal strength exceeds a delayed-reporting threshold, and in response, determining that the in-service condition is also met.

Advantageously, the system/method further comprises:
determining when the received signal strength exceeds a delayed-reporting threshold for a predetermined number of consecutive values of the received signal strength, and in response, determining that the in-service condition is also met.

Advantageously, the system/method further comprises:
determining when the received signal strength is less than a timer-reset threshold for a predetermined number of consecutive values of the received signal strength, and in response, restarting the reporting timer.

Advantageously:
the delayed-reporting threshold is less than the timer-starting threshold.

Advantageously, the system/method further comprises:
determining when the mobile station receives a paging indication, and in response, determining that the in-service condition is met.

According to an aspect, a product comprises:
a machine readable medium; and
logic stored on the medium, that when executed in a system, causes the system to:
   monitor a reported received signal strength at the mobile station;
   when the received signal strength is less than a timer-starting threshold, start a reporting timer;
   when the reporting timer lapses, determine that an in-service condition is met;
   when the in-service condition is met, report the in-service condition to the application processor.

Advantageously, the method/product further comprises:
determining when the received signal strength exceeds a delayed-reporting threshold, and in response, determining that the in-service condition is also met.

Advantageously, the method/product further comprises:
determining when the received signal strength exceeds a delayed-reporting threshold for a predetermined number of consecutive values of the received signal strength, and in response, determining that the in-service condition is also met.

Advantageously, the method/product further comprises:
determining when the received signal strength is less than a timer-reset threshold for a predetermined number of consecutive values of the received signal strength series of values, and in response, restarting the reporting timer.

Advantageously, the method/product further comprises:
determining when the mobile station receives a paging indication, and in response, determining that the in-service condition is met.

### BRIEF DESCRIPTION OF THE DRAWINGS

The system may be better understood with reference to the following drawings and description. In the figures, like reference numerals designate corresponding parts throughout the different views.

Figure 1 shows a block diagram of an exemplary mobile station that may perform wake-up suppression.

Figure 2 shows an exemplary flow diagram of the processing that wake-up suppression logic may implement.

Figure 3 is another example of the logic that wake-up suppression logic may implement.

Figure 4 shows an example of the various thresholds that the wake-up suppression logic may implement.

Figure 5 shows exemplary measurements of the received signal strength indicator (RSSI) over time, leading to reporting of an in-service condition.

Figure 6 shows exemplary measurements of RSSI over time, leading to a delayed-reporting timer elapsing and reporting an in-service condition.

### DETAILED DESCRIPTION

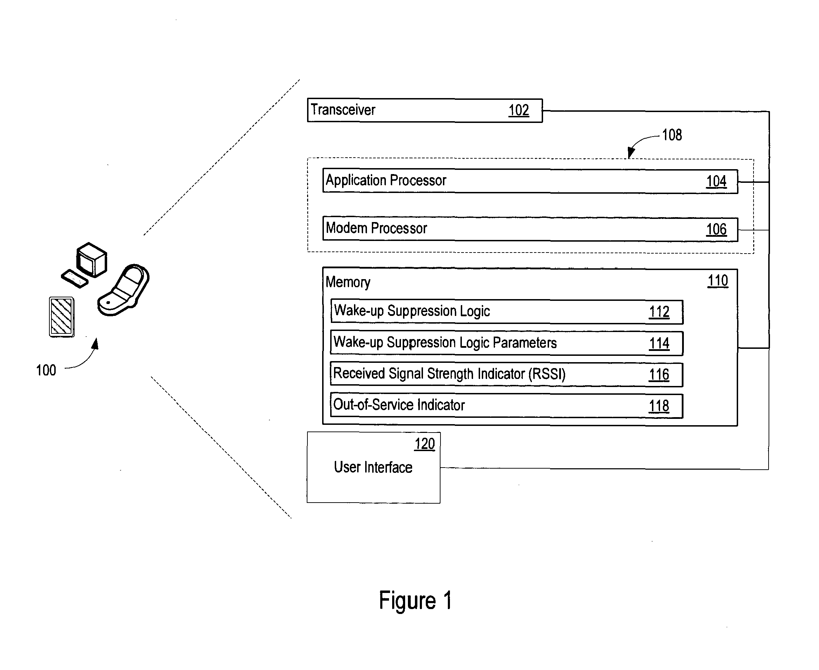

Figure 1 shows an example of a mobile station 100. The mobile station can be a wireless communications device, such as a pager, cell phone, smartphone, notebook, tablet computer, or other wireless capable of wireless communications. In one implementation, the mobile station 100 includes processor 108, a transceiver 102, a user interface 120, and memory 110. The processor 108 may control the operation of the mobile station 100 by responding to user inputs from the user interface 120, operating the transceiver 102, reading or writing information to or from the memory 110, transmitting data, receiving data, and/or processing data related to performing such tasks. In some implementations, the processor 108 may be a single processor, while in other implementations, the processor 108 may be multiple processors that are physically separate and/or logically separate. For example, the processor 108 may include an application processor 104 and a modem processor 106. The application processor 104 may, as examples, perform processing related to the user interface, user applications, and/or data networking functions. The modem processor 106 may, as examples, perform processing related to controlling the transceiver 102 and determining the received signal strength. The division of processing tasks between the processor 108 and application processor 104 need not be rigid, and either processor may be configured to perform any particular functionality depending on the implementation.

Still referring to Figure 1, the transceiver 102 can wirelessly transmit and receive voice and data using a wireless communication protocol or standard, such as GSM, CDMA, IEEE 802.11, WIMAX, WCDMA, UMTS, or other protocol or standard. As noted above, the processor 108 can communicate with the transceiver 102 to wirelessly send and receive data. The transceiver 102 may also obtain or determine the received signal strength of a signal received from the wireless communication network and report the received signal strength to the processor 108. The processor 108 can use the memory 110 to store the value of the received signal strength as a parameter or variable in memory as indicated by the received signal strength indicator 116. In addition, processor 108 can use the memory 110 to store wake-up suppression logic 112, wake-up suppression parameters 114, and an out-of-service indicator 118.

The application processor 104 and/or modem processor 106 may operate in a power-saving mode (or "sleep mode"). In the sleep mode, either processor may perform few functions, perform them more slowly, power down certain section of the processor, or otherwise operate in a reduced functionality mode. The reduced functionality mode may use less power and extend the battery life of mobile station 100. For example, the application processor 104 may enter sleep mode based on a determination that sleep mode is appropriate because a user has stopped interacting with the user interface 120, because no background data processing is scheduled, and/or because data networking functions are no longer possible or desired. Once the user beings interacting with the user interface 120, background data processing is scheduled, or data networking functions are possible or desired, the application processor 104 may exit sleep mode and "wake up." In some implementations, certain information received by the application processor 104 may cause it to wake up. When the application processor 104 receives an in-service condition indicating that a wireless link is available for background data transmission, the application processor 104 may wake up in order to send or receive background data over the wireless link. As explained further below, it may be advantageous to delay sending the in-service condition to the application processor so that the application processor 104 can remain asleep until a sufficiently reliable signal is received by the transceiver 102.

The wireless link may be used to wirelessly transmit and/or receive voice or data at the mobile station 100. An in-service condition may indicate that a wireless link for data transmission may be available between the transceiver 102 and a base station. An out-of-service condition may indicate that a wireless link may not be available between the transceiver 102 and a base station, the mobile station 100 is not registered with a network, and/or the wireless link is unreliable for transmitting data over the wireless link. The processor 108 may determine the out-of-service condition based on parameters such as data transmission error rate, the status of the physical layer resources of the wireless link, and/or the received signal strength. The out-of-service condition may be stored as an out-of-service indicator 118 in memory 110.

The mobile station 100 may register with a network. Registering with a network allows assignment of physical layer resources of the wireless link to be used for voice and/or data traffic. After the mobile station 100 registers with the network, the mobile station 100 can monitor the assigned physical layer resources to determine if data can be transmitted. If the mobile station 100 successfully registers with the network and background data can be transmitted, the modem processor 106 may report an in-service condition. The in-service condition can be determined based on the received signal strength at the transceiver 102.

The modem processor 106 may store the received signal strength in memory 110 as the received signal strength indicator (RSSI) 116. The modem processor 106 may update the RSSI 116 according to a predetermined schedule. For example, the modem processor 106 may update the RSSI 116 every second, every ten seconds, every three minutes, or any other predetermined rate. If the RSSI 116 is above the in-service condition threshold and the mobile station 100 is registered with the network, then the modem processor 106 can report an in-service condition to the application processor 104. If the RSSI 116 is below the in-service condition threshold or the mobile station 100 is not registered with the network, the modem processor may not report an in-service condition to the application processor 104. In some situations, the RSSI 116 may fluctuate between levels that would ordinarily cause toggling between reporting an in-service condition and a not-in-service condition. Each time the modem processor 106 reports an in-service condition to the application processor 104, the application processor 106 may wake up so that the application processor 104 may transmit background data over the wireless link. However, if the RSSI 116 is fluctuating between in-service and not-in-service levels, the application processor 104 would ordinarily remain awake each time it receives a service message indicating in-service condition. Receiving rapidly changing service messages may preclude the application processor 106 from obtaining the benefits of sleep mode, even though the application processor 106 is effectively unable to transmit background data.

In other implementations, the modem processor 106 may employ other logic and other thresholds for determining whether to report an in-service condition to the application processor 104. The modem processor 106 can use wake-up suppression logic (WSL) 112 along with WSL parameters 114 for determining whether to report an in-service condition to the application processor 104 after the mobile station 100 successfully registers with the network. If the WSL 112 determines that an in-service condition has been met and the mobile station 100 is successfully registered with a network, the processor 106 may report an in-service condition to the application processor 104. If the WSL 112 determines that an in-service condition has not been met or that the mobile station 100 is not successfully registered with a network, the processor 106 may not report an in-service condition to the application processor 104.

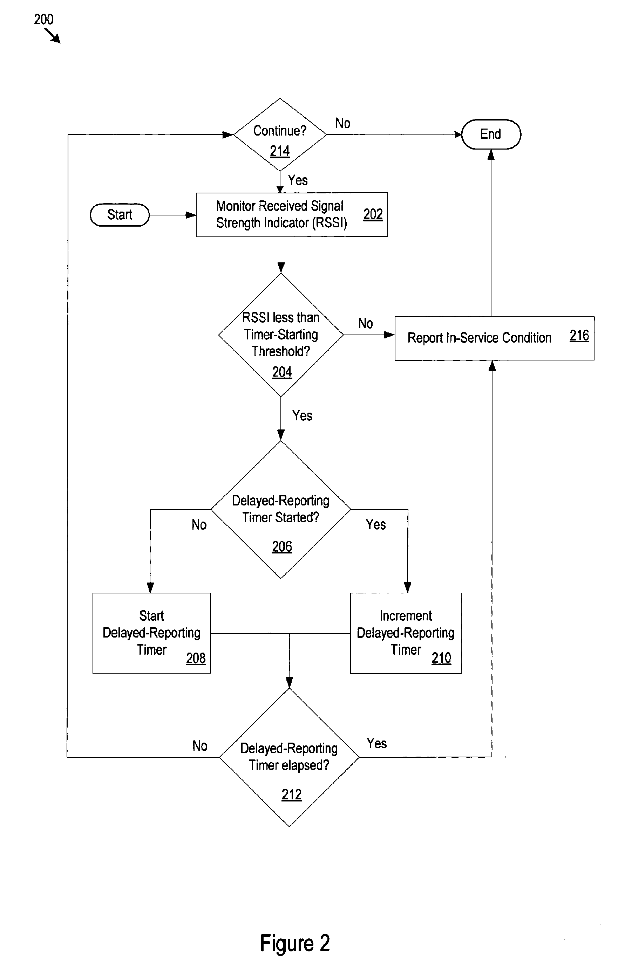

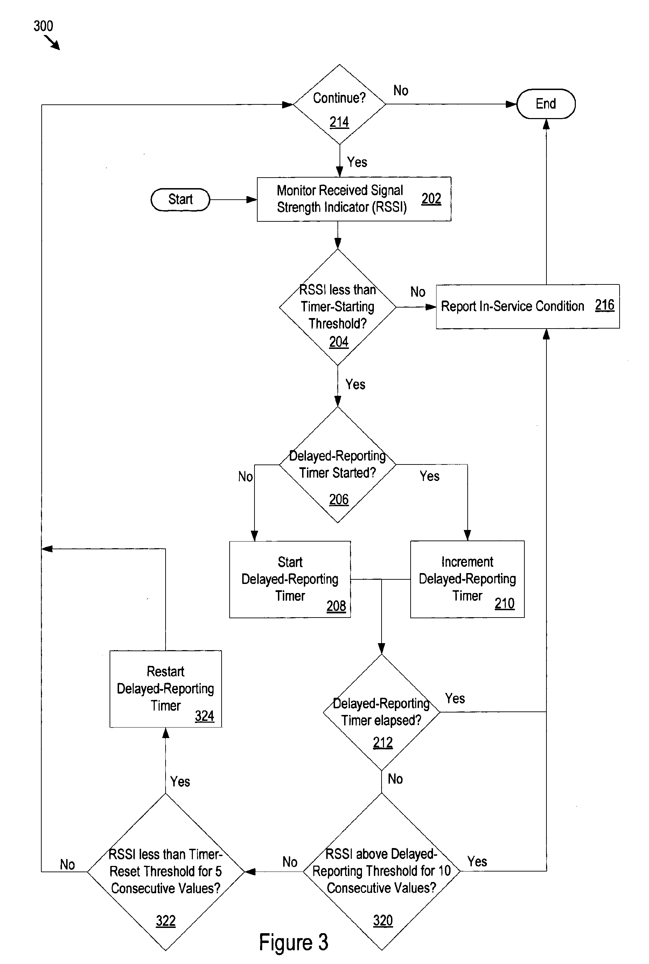

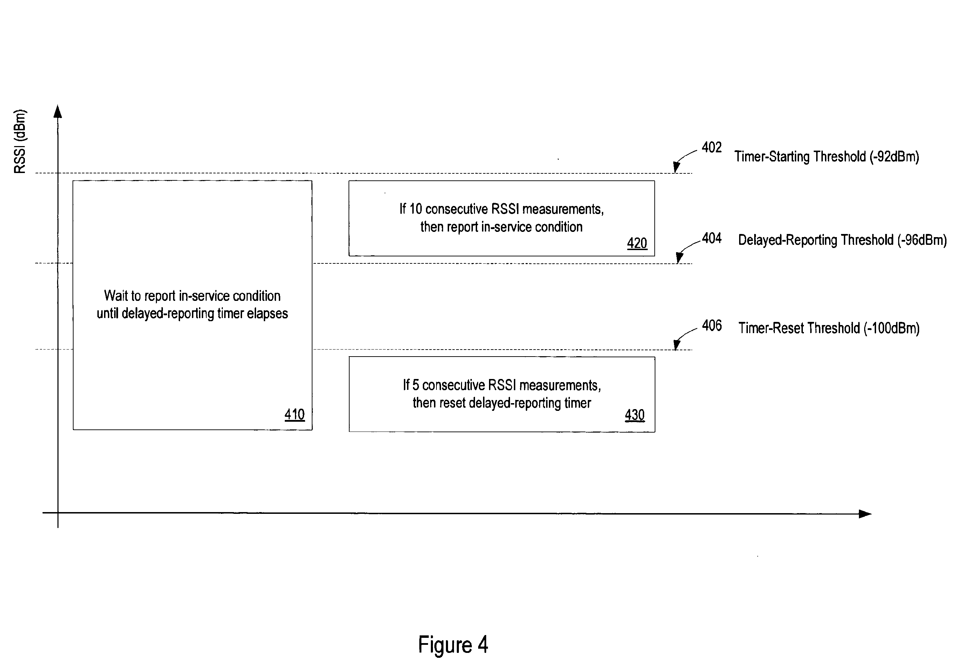

The WSL 112 can provide certain benefits, particularly when the mobile station 100 is in a low-signal coverage area that causes toggling between a not-in-service condition and an in-service condition or while the mobile station 100 is near the edge of a coverage area. In cases where the mobile station 100 toggles between a not-in-service condition and an in-service condition, the modem processor 106 may employ the WSL 112 in order to delay reporting of an in-service condition to the application processor 104. The WSL 112 can employ multiple thresholds in order to determine whether to report an in-service condition to the application processor 104. Referring to Figure 4, its shows multiple thresholds that the WSL 112 can utilize: a timer-starting threshold 402, a delayed-reporting threshold 404, and a timer-reset threshold 406. Each of these thresholds are described in detail below, with reference to various implementations as illustrated in Figure 2 and Figure 3. Each of these thresholds may be stored as one of the WSL parameters 114 in the memory 110. The modem processor 106 may set the WSL parameters 114 to certain values that are desirable for level of signal for which the wake-up suppression is active. For example, the timer-starting threshold may be set to an RSSI value of -92 dBm, the delayed-reporting threshold may be set to an RSSI value of -96 dBm, and the timer-reset threshold may be set to an RSSI value of -100 dBm.

Referring to Figure 2 and block diagram 200, in one implementation, the WSL 112 can start in at (202) where the WSL 112 monitors the RSSI 116. At (204), if the WSL 112 determines that the RSSI 116 is greater than the timer-starting threshold 402 (Figure 4), the WSL 112, through the modem processor 106, reports an in-service condition to the application processor 104. On the other hand, if the WSL 112 determines that the RSSI 116 is less than a timer-starting threshold 402, the WSL 112 continues to (206) and determines whether the delayed-reporting timer has already been started. If the delayed-reporting timer has not been started, the WSL 112 starts a delayed-reporting timer (208). If the delayed-reporting timer has already been started, the WSL 112 increments the delayed-reporting timer (210). Continuing to (212), if the delayed-reporting timer has elapsed, the WSL 112, through the modem processor 106, reports an in-service condition to the application processor 104. If the delayed-reporting timer has not elapsed, the WSL 112, through the modem processor 106, determines whether to continue the process again at (214). The delayed-reporting timer may be based on elapsed time, number of measurements, or both. The modem processor 106 may set the delayed-reporting timer to a certain value that is desirable for the wake-up suppression duration. For example, in one implementation, the delayed-reporting timer may elapse after three minutes. In another implementation, the delayed-reporting timer may elapse after ten consecutive RSSI measurements above the delayed-reporting threshold.

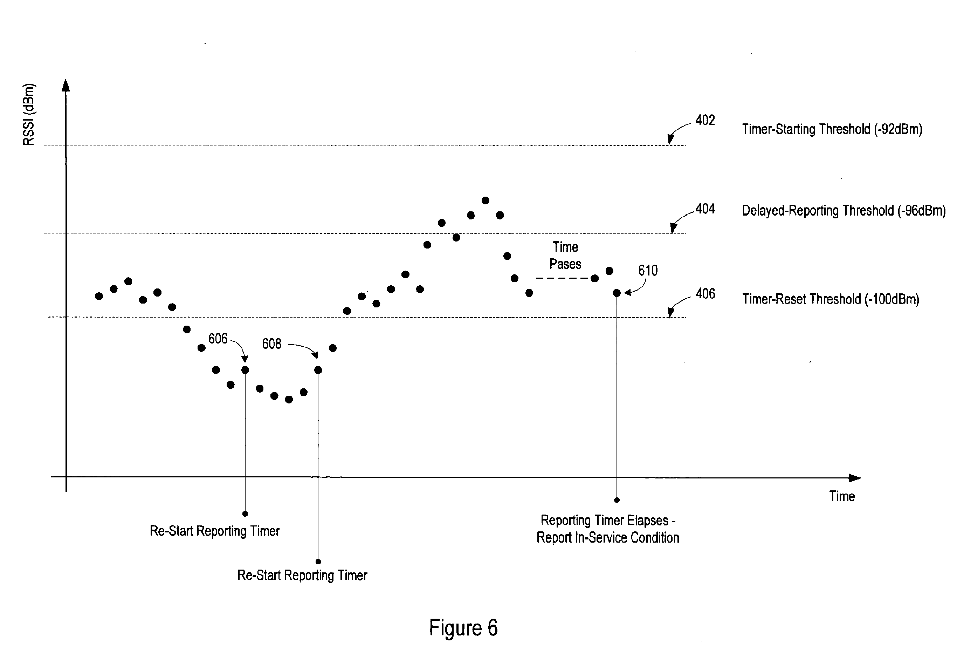

Figure 6 helps illustrate the implementation of the WSL 112 described above. Figure 6 is a plot of RSSI values on the y-axis as a function of time on the x-axis. Referring to the left-most portion of the graph, the RSSI values are below the timer-starting threshold 402. As indicated, for example, by RSSI value 606, the delayed-reporting timer is started because the RSSI values are below the timer starting threshold 402. The WSL 112 will suppress reporting of an in-service condition to the application processor 104 until the delayed-reporting timer elapses. Once the delayed reporting timer elapses, as indicated at RSSI value 610, the WSL 112 will report an in-service condition to the application processor 104.

Referring now to Figure 3, flow diagram 300 is another implementation of the WSL 122 and includes some of the same logic as indicated in Figure 2, (202)-(216), which operate as described above. However, as indicated in flow diagram 300, the WSL 112 may include logic in addition to those shown in Figure 2. For example, if the WSL 112 determines that a delayed-reporting timer has not elapsed (212), the WSL 112 determines at (320) whether the RSSI is above a delayed-reporting threshold 404. If the RSSI is above the delayed-reporting threshold 404 for ten consecutive values, the WSL 112, through the modem processor 106, reports at (216) an in-service condition to the application processor 104, even though the delayed-reporting timer may not have elapsed. If the RSSI is below the delayed-reporting threshold 404, the WSL 112 determines at (322) whether the RSSI is less than a timer-reset threshold 406. If the RSSI is less than the timer-reset threshold 406 for five consecutive values, then the WSL 112 resets the delayed-reporting timer (324) and determines whether to continue the processes again at (214). Otherwise, the WSL 112 does not reset the delayed-reporting timer and then WSL 112 determines whether to continue the process again at (214).

Figure 4 helps illustrate the implementation of the WSL 112 described above. Figure 3 shows waiting region 410, delayed-reporting region 420, and delayed-reset region 430. The waiting region 410 is defined by the area below the timer-starting threshold 402. The delayed-reporting region 420 is defined by the area above the delayed-reporting threshold 404. The delayed-reset region is defined by the area below the timer-reset threshold 406. The y-axis of Figure 3 represents RSSI values. When RSSI values are within waiting region 410, the WSL 112 will suppress the in-service condition until the delayed-reporting timer elapses or another event occurs that causes the WSL 112 to report an in-service condition. As one example of an event that may cause the WSL 112 to report an in-service condition, the WSL 112 may report an in-service condition if ten consecutive measurements be within the delayed-reporting region 420. Further, the delayed-reporting timer may be reset by certain events. For example, if five consecutive RSSI values are within the delayed-reset region 430, the WSL 112 may reset the delayed-reporting timer.

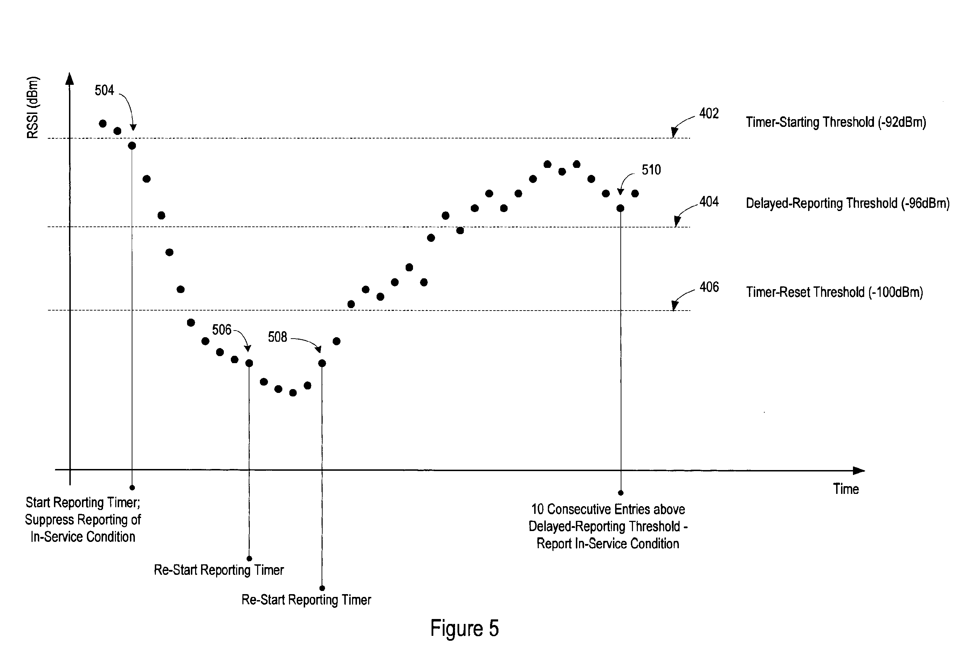

Figure 5 also helps illustrate the implementation of the WSL 112 described above. Figure 5 is a plot of RSSI values on the y-axis as a function of time on the x-axis. Starting at the left-most portion of the graph and continuing towards to right, RSSI values are measured over time. At RSSI value 504, the RSSI has fallen below the timer-starting threshold 402. Because RSSI value 504 is below the timer-starting threshold 402, the WSL 112 starts or increments the delayed-reporting timer. (Referring to Figure 2, this is the transition from 206 to 208 or 210.) Accordingly, the WSL 112 may suppress reporting an in-service condition until the delayed reporting timer elapses. Continuing further along the plot of RSSI values in Figure 5, RSSI value 506 is below the timer-reset threshold 406. Because five consecutive RSSI values were below the timer-reset threshold 406, the WSL 112 resets the delayed-reporting timer (Referring to Figure 3, this is the transition from 322 to 324). Continuing further along the plot of RSSI values in Figure 5, the WSL 112 increments the delayed-reporting timer while the RSSI values remain below the timer-starting threshold 402. However, because the delayed-reporting timer has not elapsed between RSSI value 508 and RSSI value 510, the WSL 112 does not report an in-service condition. Instead, once ten consecutive RSSI values are above the delayed-reporting threshold 404, the WSL 112 reports an in-service condition, as is shown at RSSI value 510.

Figure 6 also helps illustrate the implementation of the WSL 112 described above. Figure 6 is a plot of RSSI values on the y-axis as a function of time on the x-axis. Starting at RSSI value 606 and continuing to the right along the plot of RSSI values, the WSL 112 increments the delayed-reporting timer while the RSSI values remain below the timer-starting threshold 402. At RSSI value 610, however, the delayed-reporting timer elapses and the WSL 112 reports an in-service condition. This is in contrast to Figure 5, where ten consecutive RSSI values were above the delayed-reporting threshold 404. Referring again to Figure 6, ten consecutive RSSI values are not above the delayed-reporting threshold 404. Thus, the WSL 112 does not report an in-service condition until the delayed-reporting timer elapses at RSSI value 610.

Certain events may cause the modem processor 106 to report immediately the service condition to the application processor 104, regardless of the operational state of the WSL 112. When certain events occur, it may no longer be beneficial or desirable for the WSL 112 to suppress reporting of the in service condition. For example, the processor 108 may stop executing the WSL 112 if the out-of-service indicator 118 indicates that a wireless link for data transmission is not available, the mobile station 100 is not registered with a network, and/or the wireless link is unreliable for transmitting data. The processor 108 may resume the WSL 112 once the out-of-service indicator 118 indicates that a wireless link for data transmission may be available, the mobile station is registered with the network, and/or the wireless link is more reliable for transmitting data. As another example, if the application processor 106 is no longer in sleep mode, the modem processor 106 may stop executing the WSL 112 and/or stop suppressing reporting of the in-service condition to the application processor 104. As described above, the user may interact with the user interface 120, which may cause the application processor 104 to exit sleep mode. Additionally, the modem processor 106 may determine that a paging indication (e.g., a voice call, SMS, or data packet is designated for the mobile station 100) was received by the transceiver 102 from the base station. In order to respond the paging indication, the modem processor 106 may wake up the application processor.

Using the WSL 112, the application processor 106 is able to remain in sleep mode for a longer period of time, especially in cases where background data transmission may not be reliable and the application processor 106 may be prematurely awoken while the modem processor 104 toggles between an in-service condition and a not-in-service condition. Because the WSL 112 can suppress reporting of the in-service condition, the application processor 106 remains in sleep mode for a longer period of time, the mobile station 100 can reduce power consumption and extend battery life, even when the mobile station 100 in an area with unreliable coverage.

The methods, devices, and logic described above may be implemented in many different ways in many different combinations of hardware, software or both hardware and software. For example, all or parts of the system may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. All or part of the logic described above may be implemented as instructions for execution by a processor, controller, or other processing device and may be stored in a tangible or non-transitory machine-readable or computer-readable medium such as flash memory, random access memory (RAM) or read only memory (ROM), erasable programmable read only memory (EPROM) or other machine-readable medium such as a compact disc read only memory (CDROM), or magnetic or optical disk. Thus, a product, such as a computer program product, may include a storage medium and computer readable instructions stored on the medium, which when executed in an mobile station, computer system, or other device, cause the device to perform operations according to any of the description above.

The processing capability of the system may be distributed among multiple system components, such as among multiple processors and memories, optionally including multiple distributed processing systems. As examples, the application processor and the modem processor may be physically separate processors in different packages, may be distinct processors on the same die or in the same package, or may be implemented as a single processor that executes instructions to perform the processing described above for the modem processor and the application processor. Parameters, databases, and other data structures may be separately stored and managed, may be incorporated into a single memory or database, may be logically and physically organized in many different ways, and may implemented in many ways, including data structures such as linked lists, hash tables, or implicit storage mechanisms. Programs may be parts (e.g., subroutines) of a single program, separate programs, distributed across several memories and processors, or implemented in many different ways, such as in a library, such as a shared library (e.g., a dynamic link library (DLL)). The DLL, for example, may store code that performs any of the system processing described above. While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A method for suppressing wake-up of an application processor of a mobile station until an in-service condition is met, the method comprising:
monitoring a received signal strength at the mobile station;
when the received signal strength is less than a timer-starting threshold, starting a reporting timer;
when the reporting timer lapses, determining that an in-service condition is met;
when the in-service condition is met, reporting the in-service condition to the application processor.

2. The method of claim 1, further comprising:
determining when the received signal strength exceeds a delayed-reporting threshold, and in response, determining that the in-service condition is also met.

3. The method of claim 1, further comprising:
determining when the received signal strength exceeds a delayed-reporting threshold for a predetermined number of consecutive values of the received signal strength, and in response, determining that the in-service condition is also met.

4. The method of claim 2, further comprising:
when the received signal strength is less than a timer-reset threshold, restarting the reporting timer.

5. The method of claim 4, where:
the timer-reset threshold is less than the timer-starting threshold.

6. The method of claim 4, where:
the timer-reset threshold is less than the timer-starting threshold; and
the delayed-reporting threshold is less than the timer-starting threshold.

7. The method of claim 1, further comprising:
when the mobile station receives an out-of-service indication, restarting the reporting timer.

8. The method of claim 1, further comprising:
determining when the received signal strength is less than a timer-reset threshold for a predetermined number of consecutive values of the received signal strength series of values, and in response, restarting the reporting timer.

9. The method of claim 1, further comprising:
determining when the mobile station receives a paging indication, and in response, determining that the in-service condition is met.

10. A system comprising:
a receiver;
a modem processor in communication with the receiver;
an application processor; and
a memory comprising:
multiple thresholds; and
wake-suppression logic, that when executed by the modem processor, causes the modem processor to:
monitor a reported received signal strength at the mobile station;
determine, with respect to at least one of the thresholds, when to start a reporting timer;
determine, with respect to at least one of the thresholds, when to restart the reporting timer;
when the reporting timer lapses, determine that an in-service condition is met;
when the in-service condition is met, report the in-service condition to the application processor.

11. The method of claim 10, further comprising:
determining when the received signal strength exceeds a delayed-reporting threshold, and in response, determining that the in-service condition is also met.

12. The method of claim 10, further comprising:
determining when the received signal strength exceeds a delayed-reporting threshold for a predetermined number of consecutive values of the received signal strength, and in response, determining that the in-service condition is also met.

13. The method of claim 12, further comprising:
determining when the received signal strength is less than a timer-reset threshold for a predetermined number of consecutive values of the received signal strength, and in response, restarting the reporting timer.

14. The method of claim 13, where:
the delayed-reporting threshold is less than the timer-starting threshold.

15. A product comprising:
a machine readable medium; and
logic stored on the medium, that when executed in a system, causes the system to:
monitor a reported received signal strength at the mobile station;
when the received signal strength is less than a timer-starting threshold, start a reporting timer;
when the reporting timer lapses, determine that an in-service condition is met;
when the in-service condition is met, report the in-service condition to the application processor.
